# FASCICULE DE BREVET EUROPEEN

(11) **EP 0 745 531 B1**
(45) Date de publication et mention de la délivrance du brevet: **04.08.1999**
(21) Numéro de dépôt: 96401154.8
(22) Date de dépôt: 29.05.1996
(51) Int. Cl.: B64D 7/08, F42B 25/00

(54) **Dispositif d'accrochage d'emports sous un mat d'emport équipant un aéronef**
Vorrichtung zum Einhaken einer Last unter einem, an einem Flugzeug befestigten, Lastträger
Device for anchoring a store suspended under the pylon of an aircraft

(30) Priorité: 31.05.1995 FR 9506463
(43) Date de publication de la demande: 04.12.1996
(73) Titulaire: AEROSPATIALE Société Nationale Industrielle, 75781 Paris Cédex 16 (FR)
(72) Inventeur: Bertin, Philippe, 91360 Epinay-sur-Orge (FR); Cervera, Rémi, 75014 Paris (FR)
(74) Mandataire: Dubois-Chabert, Guy

(56) Documents cités:
- FR-A- 2 210 538
- FR-A- 2 345 346
- FR-A- 2 370 948
- FR-A- 2 408 109
- GB-A- 701 960

## Description

### Domaine technique

L'invention concerne un dispositif conçu pour permettre l'accrochage d'emports tels que des bombes, des missiles, des réservoirs, des nacelles, etc. sous un pilône ou mât d'emport équipant un aéronef.

De façon plus précise, l'invention concerne un dispositif d'accrochage permettant d'assurer le maintien en lacet des emports susceptibles d'être suspendus aux mâts d'emport équipant les avions de chasse.

### Etat de la technique

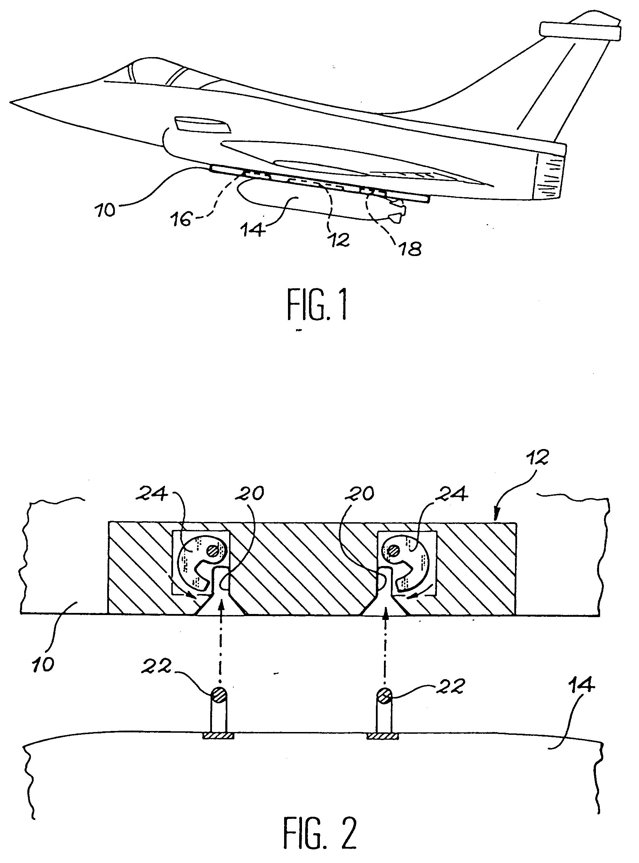

Comme l'illustre très schématiquement la figure 1, les avions de chasse sont habituellement équipés d'au moins un mât d'emport 10 permettant d'accueillir différents types d'emports tels que des bombes, des missiles, des réservoirs, des nacelles, etc..

Chaque mât d'emport 10 est équipé de plusieurs ensembles d'accrochage appelés accrocheurs (par exemple trois), décalés les uns par rapport aux autres selon la direction définie par le cap de l'avion.

L'accrocheur central 12 est destiné à la suspension d'un emport unique 14, de grande taille, tel qu'une grosse bombe.

Au contraire, l'accrocheur avant 16 et l'accrocheur arrière 18 sont prévus pour permettre l'accrochage simultané de deux emports de petites tailles tels que des petites bombes sur un même mât d'emport 10.

Les accrocheurs 12, 16 et 18 présentent habituellement une structure comparable. De façon plus précise les accrocheurs avant 16 et arrière 18 sont identiques l'un à l'autre et ils ne diffèrent de l'accrocheur central 12 que par leur dimensionnement.

On voit sur la figure 2, dans le cas particulier de l'accrocheur central 12, que chacun des accrocheurs qui équipent le mât d'emport 10 comporte deux logements identiques 20, décalés l'un par rapport à l'autre dans le sens du cap de l'aéronef. La différence de dimensionnement entre l'accrocheur central 12 et les accrocheurs avant 16 et arrière 18 réside dans l'écartement entre les logements 20 et dans la taille de ces logements, qui sont plus élevés dans le cas de l'accrocheur central que dans le cas des accrocheurs avant et arrière.

L'écartement entre les logements 20 est standardisé. Par conséquent, tous les emports 14 destinés à être suspendus aux mâts d'emport 10 des avions de chasse sont équipés de deux organes de prise habituellement constitués par des anneaux 22 qui font saillie vers le haut à partir de cet emport. Les deux anneaux 22 sont situés de part et d'autre d'un plan vertical passant par le centre de gravité de l'emport.

L'écartement entre les anneaux 22 dépend de la taille de l'emport 14. Ainsi, lorsqu'il s'agit d'un emport de grande taille susceptible d'être suspendu à l'accrocheur central 12, l'écartement entre ces anneaux est le même que l'écartement entre les logements 20 de cet accrocheur central. Au contraire, lorsqu'il s'agit d'un emport 14 de petite taille destiné à être suspendu à l'accrocheur avant 16 ou à l'accrocheur arrière 18, l'écartement entre ces anneaux 22 est un écartement plus faible qui correspond à celui qui existe entre les logements 20 de ces accrocheurs avant et arrière.

Par ailleurs, les formes et les dimensions des anneaux 22 sont standardisées, de telle sorte que ces anneaux puissent être reçus indifféremment dans les logements 20 d'un accrocheur adapté.

Pour remplir la fonction d'accrochage de l'emport 14 lorsque ses deux anneaux 22 sont reçus dans les logements 20 d'un accrocheur approprié, chacun des accrocheurs 12, 16 et 18 comporte de plus deux moyens d'accrochage constitués par des crochets 24 qui pivotent entre une position escamotée, illustrée sur la figure 2, dans laquelle ces crochets dégagent totalement les logements 20, et une position d'accrochage dans laquelle les crochets traversent la partie supérieure de chacun des logements 20. Lorsque les anneaux 22 d'un emport 14 sont reçus dans les logements 20, cette dernière position des crochets 24 assure l'accrochage de l'emport.

Le pivotement des crochets 24 entre leur position escamotée et leur position d'accrochage est assuré par exemple au moyen d'une clé.

Ces dispositifs standardisés d'accrochage des emports 14 sont des dispositifs simples et fiables qui donnent généralement satisfaction. Cependant, du fait qu'un emport n'est suspendu qu'en deux points relativement proches l'un de l'autre, il peut arriver que l'emport subisse des oscillations en lacet qui sont d'autant plus sensibles que l'emport est de grande longueur.

### Exposé de l'invention

L'invention a précisément pour objet un dispositif d'accrochage d'emports utilisant les différents éléments existants pour assurer un maintien en lacet des emports, d'une manière particulièrement simple et facile à mettre en oeuvre.

Conformément à l'invention, ce résultat est obtenu au moyen d'un dispositif d'accrochage d'emports sous un mât d'emport équipant un aéronef, ce dispositif comprenant au moins deux ensembles d'accrochages aptes à être montés sous le mât d'emport, en des emplacements décalés selon le cap de l'aéronef, et au moins un organe de prise apte à être monté sur un emport, chacun des ensembles d'accrochage comportant :
- au moins un logement apte à recevoir un organe de prise ;
- un moyen d'accrochage apte à venir en prise avec un organe de prise reçu dans le logement ;
le dispositif d'accrochage étant caractérisé par le fait qu'il comprend de plus un moyen de maintien en lacet des emports, interposé entre le logement d'un ensemble d'accrochage inutilisé et un emport suspendu à un autre ensemble d'accrochage.

Dans une forme de réalisation préférentielle de l'invention, le moyen de maintien en lacet des emports comprend un dispositif amovible apte à être monté dans le logement de l'ensemble d'accrochage inutilisé, de façon à pénétrer dans un trou formé sur l'emport suspendu à l'autre ensemble d'accrochage.

Dans cette forme de réalisation, le dispositif amovible comporte un doigt qui fait saillie vers le bas, à partir du mât d'emport, lorsque ce dispositif amovible est monté dans le logement.

De préférence, le dispositif amovible comporte alors des moyens de blocage de ce dispositif dans le logement.

Le dispositif amovible peut alors comporter un talon apte à être reçu dans le logement, les moyens de blocage comprenant une pièce de blocage montée coulissante dans le talon de façon à pouvoir venir s'appliquer contre une face latérale du logement, et des moyens pour commander un coulissement de la pièce de blocage dans le talon.

Ces moyens pour commander un coulissement de la pièce de blocage comprennent par exemple une vis vissée dans le doigt et une pièce en forme de coin liée en translation à la vis et immobilisée en rotation dans le talon, cette pièce en forme de coin étant en appui contre la pièce de blocage.

En variante, le dispositif amovible peut comprendre un autre organe de prise avec lequel peut venir en prise le moyen d'accrochage, pour immobiliser le dispositif amovible dans le logement.

Dans une deuxième forme de réalisation de l'invention, le moyen de maintien en lacet des emports comprend un doigt apte à faire saillie vers le haut sur l'emport, de façon à pénétrer dans le logement de l'ensemble d'accrochage inutilisé lorsque l'emport est suspendu à l'autre ensemble d'accrochage.

Selon le cas, le doigt peut alors être fixé sur l'emport, par exemple par des moyens de fixation démontables, ou mobile entre une position escamotée et une position en saillie.

Lorsque le doigt est mobile, il peut notamment être monté pivotant sur l'emport, de façon à être amené automatiquement dans sa position escamotée, par effet aérodynamique, lors d'un largage de l'emport.

La mobilité du doigt entre sa position en saillie et sa position escamotée peut aussi être obtenue par des moyens de commande aptes à être montés dans l'emport.

### Brève description des dessins

On décrira à présent, à titre d'exemples non limitatifs, deux formes de réalisation de l'invention, en se référant aux dessins annexés, dans lesquels :
- la figure 1, déjà décrite, est une vue de côté illustrant de façon schématique un avion de chasse muni d'un mât d'emport dont l'accrocheur central est utilisé à la suspension d'un emport de grande taille, de façon traditionnelle ;
- la figure 2, déjà décrite, est une vue de côté représentant à plus grande échelle et en coupe partielle l'accrocheur central qui équipe le mât d'emport sur la figure 1 ainsi que les anneaux équipant un emport apte à être suspendu à cet accrocheur ;
- la figure 3 est une vue de côté qui représente schématiquement un emport suspendu à un mât d'emport équipant un avion de chasse, à l'aide d'un dispositif d'accrochage selon une forme de réalisation préférentielle de l'invention ;
- la figure 4 est une vue en coupe selon la ligne IV-IV de la figure 3, illustrant plus en détail le dispositif amovible utilisé dans cette forme de réalisation de l'invention, pour assurer le maintien en lacet des emports ; et
- la figure 5 est une vue en coupe longitudinale partielle représentant un doigt pivotant monté sur un emport, selon une deuxième forme de réalisation de l'invention.

### Exposé détaillé de modes de réalisation

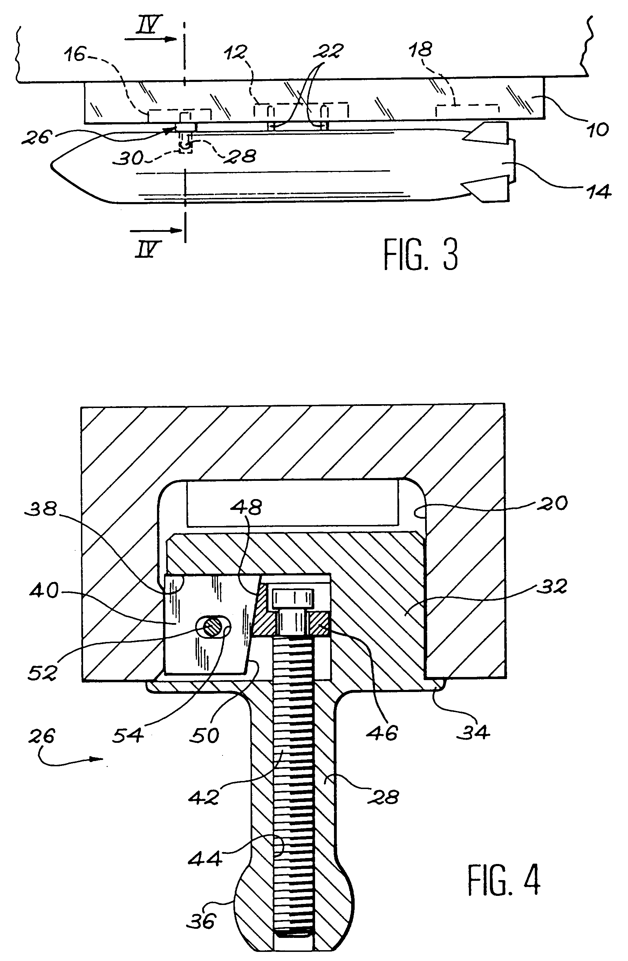

Dans la forme de réalisation illustrée schématiquement sur la figure 3, le dispositif d'accrochage conforme à l'invention comprend tout d'abord tous les éléments standard des dispositifs connus.

Ainsi, le mât d'emport 10 est équipé de façon habituelle d'un accrocheur central 12, d'un accrocheur avant 16 et d'un accrocheur arrière 18. De plus, chacun de ces accrocheurs 12, 16 et 18 est réalisé de la façon habituelle décrite précédemment en se référant à la figure 2, c'est-à-dire qu'il comporte deux logements 20 décalés selon une direction correspondant au cap de l'avion, ainsi que des crochets 24 susceptibles de venir en prise avec des anneaux 22 montés à la partie supérieure centrale d'un emport 14, lorsque ces anneaux sont introduits dans les deux logements de l'accrocheur correspondant.

Conformément à l'invention, ces éléments habituels des dispositifs d'accrochage existants sont complétés par l'adjonction de moyens supplémentaires permettant d'assurer un maintien en lacet de l'emport 14.

Dans la forme de réalisation préférentielle illustrée sur les figures 2 et 3, ces moyens de maintien en lacet comprennent principalement un dispositif amovible 26 prévu pour être monté dans l'un des logements 20 des accrocheurs non utilisés pour la suspension de l'emport 14. Ainsi, dans le cas illustré sur la figure 3 où l'emport 14 est suspendu à l'accrocheur central 12, le dispositif amovible 26 de maintien en lacet peut être monté soit dans l'un des deux logements 20 de l'accrocheur avant 16, comme on l'a illustré, soit dans l'un des deux logements 20 de l'accrocheur arrière 18.

Lorsque le dispositif amovible 26 est monté dans un logement 20 d'un accrocheur inutilisé, un doigt 28 de ce dispositif amovible fait saillie vers le bas, de façon à pénétrer dans un trou 30 prévu à cet effet dans l'emport 14, lorsque ce dernier est suspendu à un autre accrocheur.

La fixation du dispositif amovible 26 dans un logement 20 d'un accrocheur inutilisé peut être faite au moyen du crochet 24 associé à ce logement 20, en donnant à la partie supérieure du dispositif amovible 26 une forme identique à celle des anneaux 22. Cependant, cette solution est le plus souvent inadaptée, du fait de la présence sur de nombreux avions de chasse de systèmes de sécurité ne permettant pas aux crochets de l'accrocheur central 12 et des accrocheurs avant 16 et arrière 18 d'être amenés simultanément en position d'accrochage.

C'est pourquoi on décrira à présent en se référant à la figure 4 une forme de réalisation du dispositif amovible 26, dans laquelle le montage de ce dispositif dans l'un quelconque des logements 20 est assuré par des moyens de blocage appartenant au dispositif amovible.

Dans cette forme de réalisation, le doigt 28 du dispositif amovible 26 est prolongé vers le haut par un talon 32 qui présente en vue de dessus une forme rectangulaire, complémentaire de la forme des logements 20. Ce talon 32 est délimité vers le bas par un rebord 34 qui vient en appui contre la face inférieure du mât d'emport 10 lorsque le talon est reçu dans le logement 20. Le doigt 28, qui présente sensiblement la forme d'un cylindre, est alors orienté verticalement vers le bas, de façon à pénétrer dans le trou 30 lorsque l'emport est suspendu à un autre des accrocheurs équipant le mât d'emport 10. Pour faciliter son entrée dans le trou 30, le doigt 28 comporte avantageusement un renflement 36, de forme sensiblement sphérique, à son extrémité inférieure.

Le talon 32 du dispositif amovible 26 comporte un évidement 38 qui débouche latéralement au-dessus du rebord 34. Une pièce de blocage 40 est montée de façon coulissante dans cet évidement 38 du talon 32. L'échappement de la pièce de blocage 40 est empêché par une goupille 52 fixée dans le talon 32 et traversant une fente horizontale 54 formée dans la pièce 40. Lorsque le talon 32 est reçu dans un logement 20, la pièce de blocage 40 peut donc se déplacer selon une direction sensiblement horizontale, sous l'action de moyens de commande qui vont à présent être décrits.

Ces moyens de commande du coulissement de la pièce de blocage 40 comprennent principalement une vis sans tête 42, vissée dans un trou taraudé 44 qui traverse selon son axe le doigt 28 et débouche dans l'évidement 38. L'extrémité basse de la vis 42, située approximativement au niveau du bas du doigt 28, comporte une empreinte (non représentée). Cette empreinte permet à un opérateur, à l'aide d'un outil approprié, de visser ou de dévisser la vis 42.

A son extrémité haute située dans l'évidement 38, la vis 42 comporte une région de diamètre réduit sur laquelle est montée une pièce 46 en forme de coin. Cette pièce 46 coopère avec la paroi de fond et les parois latérales de l'évidement 38, de telle sorte qu'elle est immobilisée en rotation. Par ailleurs, son montage sur la région de diamètre réduit de la vis 42 est réalisé pratiquement sans jeu, de façon à lier en translation cette pièce 46 à la vis 42.

La face 48 de la pièce 46 tournée vers la pièce de blocage 40 est inclinée par rapport à l'axe de la vis 42, de telle sorte que l'extrémité haute de la face 48 est plus proche de l'axe de la vis 42 que son extrémité basse.

Cette face 48 de la pièce 46 en forme de coin est en contact avec une face complémentaire 50 de la pièce de blocage 40, tournée vers le fond de l'évidement 38.

Grâce à l'agencement qui vient d'être décrit, le vissage de la vis 42 a pour effet une montée de la pièce 46 en forme de coin dans l'évidement 38, qui se traduit par un déplacement horizontal de la pièce de blocage 40 vers l'extérieur de cet évidement. L'ensemble constitué par la vis 42, la pièce 46 en forme de coin et la pièce de blocage 40 constituent ainsi des moyens de blocage grâce auxquels le talon 32 du dispositif amovible 26 peut être bloqué dans l'un quelconque des logements 20 des différents accrocheurs qui équipent les mâts d'emport des avions de chasse.

Ainsi, comme on l'a illustré à titre d'exemple sur la figure 3, l'accrochage d'un emport 14 à l'accrocheur central 12 d'un mât d'emport 10 est précédé, conformément à l'invention, du montage du dispositif amovible 26 dans un logement 20 de l'un des accrocheurs inutilisés, tel que l'accrocheur avant 16. Lorsque l'emport 14 est ensuite accroché à l'accrocheur central 12, le doigt 28 du dispositif amovible 26 pénètre dans le trou 30 formé dans l'emport 14 de telle sorte qu'un maintien en lacet de cet emport est assuré.

Comme on l'a déjà indiqué, le dispositif amovible 26 peut être placé dans un logement 20 de l'un ou l'autre des accrocheurs inutilisés. Par ailleurs, les moyens par lesquels le dispositif amovible 26 est monté dans ce logement peuvent être différents des moyens qui viennent d'être décrits en se référant à la figure 4.

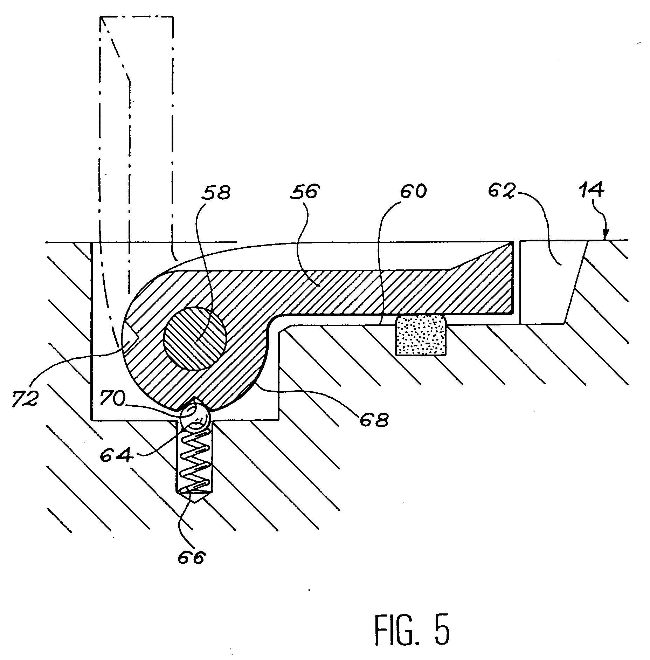

Sur la figure 5, on a illustré à titre d'exemple une deuxième forme de réalisation de l'invention qui diffère principalement de la forme de réalisation des figures 3 et 4 par le fait qu'au lieu d'être assuré par un dispositif monté dans un logement 20 d'un accrocheur inutilisé, le maintien en lacet de l'emport est réalisé en équipant ce dernier d'un doigt 56 apte à faire saillie vers le haut. Lorsque l'emport 14 est suspendu à l'un des accrocheurs qui équipent le mât d'emport d'un aéronef, ce doigt 56 pénètre dans l'un des logements 20 d'un accrocheur inutilisé de ce même mât d'emport. La fonction de maintien en lacet de l'emport 14 est ainsi assurée.

Le doigt 56 peut être un doigt fixe, réalisé directement sur l'emport lors de sa fabrication ou rapporté sur ce dernier par des moyens de fixation appropriés, par exemple par vissage du doigt dans un trou taraudé formé dans l'emport.

Lorsque l'emport est destiné à être largué, il est avantageux de réaliser le doigt 56 de façon telle qu'il puisse se déplacer entre une position en saillie, dans laquelle il assure la fonction de maintien en lacet, et une position escamotée prise par le doigt après le largage de l'emport.

Dans la forme de réalisation illustrée sur la figure 5, le doigt 56 est représenté en trait plein dans sa position escamotée et en traits mixtes dans sa position en saillie. Dans ce cas, le déplacement du doigt entre ces deux positions s'effectue par pivotement autour d'un axe 58 orienté transversalement par rapport à l'emport 14.

Le passage de la position en saillie à la position escamotée est assuré automatiquement par effet aérodynamique, dès le largage de l'emport. En effet, l'air environnant agit immédiatement sur le doigt 56 en saillie pour le rabattre vers l'arrière, par pivotement autour de son axe 58. Dans la position escamotée qu'il occupe alors, le doigt 56 est logé en totalité dans un creux 60 formé sur l'emport 14. Une encoche 62 prolongeant vers l'arrière le creux 60 permet à l'opérateur d'amener le doigt 56 dans sa position en saillie, lorsqu'il monte l'emport 14 sur l'aéronef.

Dans la forme de réalisation illustrée sur la figure 5, des moyens d'indexage sont prévus pour maintenir le doigt 56 dans sa position en saillie et dans sa position escamotée. Ces moyens d'indexage comprennent une bille 64 plaquée par un ressort 66 contre une surface 68, de section circulaire, formée sur le doigt 56. Ils comprennent aussi deux crans 70 et 72 formés sur cette surface 68 et dans lesquels pénètre la bille 64, respectivement dans la position escamotée et dans la position en saillie du doigt 56.

Il est à noter qu'en variante, le déplacement du doigt 56 entre sa position en saillie et sa position escamotée peut être commandé par des moyens de commande tels qu'un dispositif pyrotechnique monté dans l'emport. Le mouvement de pivotement peut alors être remplacé par un coulissement du doigt selon une direction sensiblement radiale ou par tout autre déplacement.

## Revendications

1. Dispositif d'accrochage d'emports (14) sous un mât d'emport (10) équipant un aéronef, ce dispositif comprenant au moins deux ensembles d'accrochage (12,16,18) aptes à être montés sous le mât d'emport, en des emplacements décalés selon le cap de l'aéronef, et au moins un organe de prise (22) apte à être monté sur un emport (14), chacun des ensembles d'accrochage (12,16,18) comportant :
- au moins un logement (20) apte à recevoir un organe de prise ;
- un moyen d'accrochage (24) apte à venir en prise avec un organe de prise reçu dans le logement ;
le dispositif d'accrochage étant caractérisé par le fait qu'il comprend de plus un moyen (26) de maintien en lacet des emports, interposé entre le logement (20) d'un ensemble d'accrochage (12, 16,18) inutilisé et un emport (14) suspendu à un autre ensemble d'accrochage.

2. Dispositif selon la revendication 1, caractérisé par le fait que le moyen de maintien en lacet des emports comprend un dispositif amovible (26) apte à être monté dans le logement (20) de l'ensemble d'accrochage (12, 16, 18) inutilisé, de façon à pénétrer dans un trou (30) formé sur l'emport (14) suspendu à l'autre ensemble d'accrochage.

3. Dispositif selon la revendication 2, caractérisé par le fait que le dispositif amovible (26) comporte un doigt (28) qui fait saillie vers le bas, à partir du mât d'emport (10), lorsque ce dispositif amovible est monté dans le logement.

4. Dispositif selon l'une quelconque des revendications 2 et 3, caractérisé par le fait que le dispositif amovible (26) comporte des moyens de blocage (42,46,40) de ce dispositif dans le logement.

5. Dispositif selon la revendication 4, caractérisé par le fait que le dispositif amovible (26) comporte un talon (32) apte à être reçu dans le logement, les moyens de blocage comprenant une pièce de blocage (40) montée coulissante dans le talon de façon à pouvoir venir s'appliquer contre une face latérale du logement, et des moyens (42,46) pour commander un coulissement de la pièce de blocage dans le talon.

6. Dispositif selon les revendications 3 et 5 combinées, caractérisé par le fait que les moyens pour commander un coulissement de la pièce de blocage (40) comprennent une vis (42) vissée dans le doigt (28) et une pièce (46) en forme de coin liée en translation à la vis et immobilisée en rotation dans le talon (32), cette pièce en forme de coin étant en appui contre la pièce de blocage.

7. Dispositif selon l'une quelconque des revendications 2 et 3, caractérisé par le fait que le dispositif amovible (26) comporte un autre organe de prise avec lequel peut venir en prise le moyen d'accrochage (22), pour immobiliser le dispositif amovible dans le logement (20).

8. Dispositif selon la revendication 1, caractérisé par le fait que le moyen de maintien en lacet des emports comprend un doigt (56) apte à faire saillie vers le haut sur l'emport (14), de façon à pénétrer dans le logement (20) de l'ensemble d'accrochage (12, 16, 18) inutilisé, lorsque l'emport (14) est suspendu à l'autre ensemble d'accrochage.

9. Dispositif selon la revendication 8, caractérisé par le fait que le doigt (56) est apte à être fixé sur l'emport (14) par des moyens de fixation démontables.

10. Dispositif selon la revendication 8, caractérisé par le fait que le doigt (56) est mobile entre une position escamotée et une position en saillie.

11. Dispositif selon la revendication 10, caractérisé par le fait que le doigt (56) est apte à être monté pivotant sur l'emport (14), de façon à être amené automatiquement dans sa position escamotée, par effet aérodynamique, lors d'un largage de l'emport.

12. Dispositif selon la revendication 10, caractérisé par des moyens de commande aptes à être montés dans l'emport pour déplacer le doigt (56) entre sa position en saillie et sa position escamotée.

## Claims

1. Device for attaching external stores (14) to a stores strut (10) of an aircraft, this device comprising at least two attachment assemblies (12, 16, 18) which can be mounted on the stores strut, at points which are offset in the direction of the heading of the aircraft, and at least one catching member (22) which can be mounted on a store (14), each of the attachment assemblies (12, 16, 18) comprising:
- at least one housing (20) capable of accommodating a catching member;
- an attachment means (24) capable of engaging with a catching member accommodated in the housing;
the attachment device being characterized in that it additionally comprises a means (26) for holding the stores in place in terms of yaw, this means being inserted between the housing (20) of an unused attachment assembly (12, 16, 18) and a store (14) suspended from another attachment assembly.

2. Device according to Claim 1, characterized in that the means of holding the stores in place in terms of yaw comprises a removable device (26) which can be mounted in the housing (20) of the unused attachment assembly (12, 16, 18) in such a way as to enter a hole (30) made in the store (14) suspended from the other attachment assembly.

3. Device according to Claim 2, characterized in that the removable device (26) comprises a finger (28) which projects downwards from the stores strut (10) when this removable device is mounted in the housing.

4. Device according to either one of Claims 2 and 3, characterized in that the removable device (26) comprises means (42, 46, 40) of locking this device in the housing.

5. Device according to Claim 4, characterized in that the removable device (26) has a heel (32) which can be accommodated in the housing, the locking means comprising a locking piece (40) mounted so that it can slide in the heel in such a way as to be able to press against a lateral face of the housing, and means (42, 46) for making the locking piece slide in the heel.

6. Device according to Claims 3 and 5 combined, characterized in that the means for making the locking piece (40) slide comprise a screw (42) screwed into the finger (28) and a wedge-shaped piece (46) connected to the screw in terms of translation and prevented from rotating in the heel (32), this wedge-shaped piece bearing against the locking piece.

7. Device according to either one of Claims 2 and 3, characterized in that the removable device (26) comprises another catching member with which the attachment means (22) can engage to immobilize the removable device in the housing (20).

8. Device according to Claim 1, characterized in that the means of holding the stores in place in terms of yaw comprises a finger (56) capable of projecting upwards from the store (14) so as to enter the housing (20) of the unused attachment assembly (12, 16, 18) when the store (14) is suspended from the other attachment assembly.

9. Device according to Claim 8, characterized in that the finger (56) is capable of being fixed to the store (14) by removable fastening means.

10. Device according to Claim 8, characterized in that the finger (56) can move between a retracted position and a projecting position.

11. Device according to Claim 10, characterized in that the finger (56) can be mounted so that it can pivot on the store (14) so as to be brought automatically into its retracted position through an aerodynamic effect when the store is released.

12. Device according to Claim 10, characterized by control means which can be mounted in the store for moving the finger (56) between its projecting position and its retracted position.

## Patentansprüche

1. Vorrichtung zum Einhaken einer Last (14) unter einem an einem Flugzeug befestigten Lastträger (10), wobei diese Vorrichtung wenigstens zwei Einhaksysteme (12,16,18) umfaßt, geeignet an gemäß dem Kurs des Flugzeugs versetzten Stellen unter den Lastträger montiert zu werden, und wenigstens ein an eine Last (14) montierbares Eingreiforgan (22), wobei jedes der Einhaksysteme (12,14,16) umfaßt:
- wenigstens einen Sitz (20) zur Aufnahme eines Eingreiforgans;
- einen Haken (24) zum Eingriff in ein in dem Sitz aufgenommenes Eingreiforgan;
dabei ist dieser Einhakvorrichtung **dadurch gekennzeichnet,** daß sie außerdem eine Gierbewegungs-Halteeinrichtung (26) der Lasten umfaßt, eingefügt zwischen ein nichtbenutztes Einhaksystem (12,16,18) und eine Last (14), die an einem anderen Einhaksystem aufgehängt ist.

2. Vorrichtung nach Anspruch 1, dadurch gekennzeichnet, daß die Gierbewegungs-Halteeinrichtungen eine herausnehmbare Vorrichtung (26) umfassen, die in einen nichtbenutzten Sitz (20) des Einhaksystems (12,16,18) eingesetzt werden kann und in ein Loch (30) eindringt, das in der an dem anderen Einhaksystem aufgehängten Last (14) ausgebildet ist.

3. Vorrichtung nach Anspruch 2, dadurch gekennzeichnet, daß die herausnehmbare Vorrichtung (26) einen Finger (28) umfaßt, der aus dem Lasträger (10) nach unten vorsteht, wenn diese herausnehmbare Vorrichtung sich in dem Sitz befindet.

4. Vorrichtung nach einem der Ansprüche 2 und 3, dadurch gekennzeichnet, daß die herausnehmbare Vorrichtung (26) Blockiereinrichtungen (42,46,40) dieser Vorrichtung in dem Sitz umfaßt.

5. Vorrichtung nach Anspruch 4, dadurch gekennzeichnet, daß die herausnehmbare Vorrichtung (26) einen Fuß (32) zur Aufnahme in dem Sitz umfaßt und die Blockiereinrichtungen ein Blockierstück (40), das gleitend in den Fuß eingebaut ist, so daß es gegen eine Seitenwand des Sitzes gepreßt werden kann, und Steuereinrichtungen (42,46) einer Gleitbewegung des Blockierstücks in dem Fuß.

6. Vorrichtung nach einem der Ansprüche 3 und 5 kombiniert, dadurch gekennzeichnet, daß die Steuereinrichtungen der Gleitbewegung des Blockierstücks (40) eine in den Finger (28) geschraubte Schraube (42) und ein keilförmiges Teil (46) umfassen, das sich mit der Schraube (42) parallelverschiebt und gegen Drehung in dem Fuß (32) arretiert ist, wobei dieses keilförmige Teil sich auf dem Blockierstück abstützt.

7. Vorrichtung nach einem der Ansprüche 2 und 3, dadurch gekennzeichnet, daß die herausnehmbare Vorrichtung (26) ein anderes bzw. weiteres Eingreiforgan umfaßt, in das der Haken (24) eingreifen kann, um die herausnehmbare Vorrichtung in dem Sitz (20) zu blockieren.

8. Vorrichtung nach Anspruch 1, dadurch gekennzeichnet, daß die Gierbewegungs-Halteeinrichtungen einen Finger (56) umfassen, der aus der Last (14) nach oben vorstehen kann, um in den Sitz (20) des nichtbenutzten Einhaksystems (12,16,18) einzudringen, wenn die Last (14) an dem anderen Einhaksystem aufgehängt ist.

9. Vorrichtung nach Anspruch 8, dadurch gekennzeichnet, daß der Finger (56) an der Last (14) festgemacht werden kann mittels demontierbarer Befestigungseinrichtungen.

10. Vorrichtung nach Anspruch 8, dadurch gekennzeichnet, daß der Finger (56) beweglich ist zwischen einer versenkten Stellung und einer herausstehenden Stellung.

11. Vorrichtung nach Anspruch 10, dadurch gekennzeichnet, daß der Finger (56) derart schwenkbar in die Last (14) montiert sein kann, daß er beim Abwerfen der Last durch aerodynamischen Effekt automatisch in seine versenkte Stellung gebracht wird.

12. Vorrichtung nach Anspruch 10, gekennzeichnet durch geeignete, in die Last montierte Betätigungseinrichtungen, um den Finger (56) zwischen seiner vorstehenden Stellung und seiner versenkten Stellung zu bewegen.
